# EUROPÄISCHE PATENTANMELDUNG

(11) **EP 3 403 818 A1**
(43) Veröffentlichungstag der Anmeldung: **21.11.2018**
(21) Anmeldenummer: 17171052.8
(22) Anmeldetag: 15.05.2017
(51) Int. Cl.: B32B 15/02, C04B 26/06, C04B 26/14, C04B 26/16, C04B 26/28, C04B 26/32, C04B 28/02, C04B 28/14, E04F 15/00, E04B 1/78, C04B 28/10, C04B 28/12

(54) **WÄRMEDÄMMENDER FORMKÖRPER ENTHALTEND EIN PORÖSES SUBSTRAT**

(71) Anmelder: Evonik Degussa GmbH, 45128 Essen (DE)
(72) Erfinder: GERHATZ-KALTE, Bettina, 65597 Hünfelden (DE); GEISLER, Matthias, 63538 Großkrotzenburg (DE)

(57) **Zusammenfassung**

Mechanisch stabiler wärmedämmender Formkörper mit einer geringen Wärmeleitfähigkeit, umfassend ein poröses Substrat und eine wärmedämmende Formulierung enthaltend mindestens ein Bindemittel und mindestens einen mineralischen Zuschlagsstoff kann durch ein einfaches Verfahren im Werk hergestellt werden und ist geeignet unter anderem zur Wärmedämmung von Gebäuden

## Beschreibung

Die vorliegende Erfindung betrifft einen wärmedämmenden Formkörper enthaltend ein poröses Substrat und Verfahren zur deren Herstellung

Effektive Wärmedämmung von Häuser, industriellen Anlagen, Rohrleitungen und desgleichen stellt ein wichtiges volkswirtschaftliches Problem dar. Die meisten auf organischen Stoffen basierenden Isolierungsmaterialien, wie Polyurethanschäume sind brennbar und nur bei eingeschränkten Temperaturen einsetzbar. Die bisher weniger verbreiteten Wärmedämmungsmaterialien basierend auf anorganischen Oxiden, beispielsweise hochporöses Siliziumdioxid, weisen diese Nachteile nicht auf.

Als Basis solcher Siliziumdioxid-basierenden wärmedämmenden Materialien werden üblicherweise die sogenannten Aerogele, sowie gefällte oder pyrogen hergestellte Kieselsäuren verwendet. Weiterführende Informationen zu diesen Kieselsäuretypen sind in Ullmann's Encyclopedia of Industrial Chemistry, Kapitel "Silica" veröffentlicht online am 15.04.2008, DOI: 10.1002/14356007.a23_583.pub3, zu finden.

Die zuvor beschriebenen Wärmedämmenden Materialien können beispielsweise in Form einer Beschichtung oder als im Werk vorgefertigte wärmedämmende Platte auf die zu dämmende Oberfläche aufgebracht werden.

In WO 03/064025 A1 werden solche wärmedämmenden Beschichtungen und deren Applizierung beschrieben. Eine geeignete Zusammensetzung enthaltend wasser-basierte polymerisierbare Acrylat-Binder, hydrophobe Aerogele und gegebenenfalls weitere Zusatzstoffe, wie IR-Trübungsmittel, wird üblicherweise in einer Schichtdicke von 1 mm oder weniger aufgetragen und beispielsweise thermisch gehärtet.

Eine dickere Wärmedämmungsschicht, die eine bessere Wärmedämmung gewährleisten würde, kann mittels einer Zusammensetzung wie in WO 03/064025 A1 offenbart nur in mehreren Arbeitsschritten nacheinander aufgetragen werden. Dabei ist häufig eine extrem langsame Trocknung mit langen Standzeiten zu beobachten.

In EP1988228A2 werden wärmedämmende Formteile und Platten mit einer Wärmeleitfähigkeit von 14 bis 22 mW/m*K, einer Dichte von 80 bis 300 kg/m³ bestehend aus mikroporösen Wärmedämmstoffen ohne Bindemittel offenbart. Der Nachteil solcher Systeme ohne Bindemittel ist üblicherweise ihre mangelnde mechanische Stabilität, Brüchigkeit und hohe Staubbildung.

US 5041321 A offenbart ein mehrstufiges Verfahren zur Herstellung von keramischen Fasern haltigen Wärmedämmungsmaterialien durch Imprägnieren von aus keramischen Fibern bestehenden Matten mit Sol-Gel Binder und nachfolgende Gelierung und Aushärtung dieses Binders in der Matte. Diese Methode führt zwar zu mechanisch stabilen wärmedämmenden Materialien, ist aber technisch nur sehr aufwendig ausführbar und deswegen wirtschaftlich nachteilig.

In US 20060125158 A1 wird ein Verfahren zur Herstellung eines wärmedämmenden Materials enthaltend hydrophobe Aerogelpartikeln, Fasern und Benetzungsmittel offenbart. Dabei wird ein Gemisch aus einer wässrigen Suspension eines hydrophoben Aerogels, Fasern und einem Benetzungsmittel getrocknet um das fertige Material zu erhalten.

Die Aufgabe der vorliegenden Erfindung ist es, einen wärmedämmenden Formkörper bereitzustellen, der eine hohe mechanische Stabilität, geringe Staubbildung aufweist und einfach und wirtschaftlich im Werk herstellbar ist. Eine weitere Aufgabe der Erfindung ist es, ein Verfahren zur Herstellung eines solchen wärmedämmenden Formkörpers bereitzustellen.

Der Gegenstand der vorliegenden Erfindung ist wärmedämmender Formkörper aufweisend Wärmeleitfähigkeit von bis zu 100 mW/(m*K), umfassend ein poröses Substrat und eine wärmedämmende Formulierung enthaltend mindestens ein Bindemittel und mindestens einen Zuschlagsstoff.

Der erfindungsgemäße wärmedämmende Formkörper kann eine flache Form haben, beispielsweise eine Platte darstellen oder eine andere Geometrie aufweisen, beispielsweise eckig, gewölbt, rund und so weiter sein.

Das poröse Substrat im Sinne der Erfindung stellt ein zusammenhängendes poröses dreidimensionales Netzwerk dar. Dieses in dem erfindungsgemäßen Formkörper eingesetzte poröse Substrat kann durch seine dazu geeignete Form und Beschaffenheit die wärmedämmende Formulierung vor und während der Härtung so befestigen und halten, dass keine vorzeitige Verformung stattfindet und ein relativ dicker wärmedämmende Formkörper in wenigen, bevorzugt in einem Arbeitsschritt erzeugt werden kann.

Die Porosität P eines Materials wird oft als Verhältnis von Hohlraumvolumen zu Gesamtvolumen dieses Materials ausgedrückt und kann somit die Werte von 0 bis 1 annehmen. Die Porosität P des porösen Substrats im Sinne der vorliegenden Erfindung, kann von 0,3 bis 1 betragen, besonders bevorzugt ist sie von 0,5 bis 0,99, ganz besonders bevorzugt von 0,7 bis 0,98. Das poröse Substrat kann aus der Gruppe bestehend aus synthetischen Polymeren, Zellulose-basierten Faser, Baumwolle, Wolle, Seide, Mineralwolle, Glaswolle, Metallen, Kohlefaser und deren Kombinationen ausgewählt werden.

Das poröse Substrat kann aus einem Abstandgewirke bestehen. Abstandsgewirke zeichnen sich durch einen leichten, luftdurchlässigen Aufbau aus, wobei Abstandsgewirke durch die zwischen den beiden Gewirkelagen verlaufenden Abstandsfäden in Richtung ihrer Dicke elastisch sind.

Die geeignete Ausführung des porösen Substrats soll optimaler Weise auf die Elemente des Gesamtsystems: Dämmdicke, Zusammensetzung der Formulierung, Einsatzbereich und so weiter abgestimmt sein. Hierbei kann durch die Wahl des porösen Substrats eine optimale Konfiguration aus der Anzahl, Form und Größe der poröses Substrat bildenden Elementen, sowie der Größe und Form und Ausführung der Deckflächenöffnungen gewählt werden, um die wärmedämmende Formulierung einzubringen und deren Fixierung in dem porösen Substrat zu gewährleisten. Bevorzugt werden Öffnungen in der Deckfläche eingesetzt, die maximal um Faktor 10 größer sind, als die größten Partikel der mineralischen Zuschlagsstoffe und andere Feststoffadditive der wärmedämmenden Formulierung. Besonders vorteilhaft ist es, wenn diese Öffnungen eine Art automatischen Verschluss aufweisen, zum Beispiel Fäden, die durch Eigenspannung in eine mittlere, engere Position zurückdrücken (Diodenwirkung). Hierdurch kann eine effektive Befüllung des porösen Substrats erfolgen. Die Abstände zwischen den Deckschichten können auch durch andere als Abstandgewirken Formen realisiert werden, wie zum Beispiel Stege. Auch muss das Abstandsgewirke nicht zwangsweise zwei Deckflächen aufweisen, es kann auch beispielsweise keine oder eine haben. Auch kann eine Seite ganz oder nahezu ganz geschlossen sein.

Der erfindungsgemäße wärmedämmende Formkörper kann eine Dicke von 1 bis 500 mm aufweisen, vorzugsweise beträgt diese 5 bis 400 mm, bevorzugt 10 bis 250 mm, besonders bevorzugt von 20 bis 200 mm, ganz besonders bevorzugt von 50 bis 200 mm.

Der erfindungsgemäße wärmedämmende Formkörper enthält mindestens ein Bindemittel und mindestens einen Zuschlagsstoff. Das Bindemittel kann die einzelnen Teile der gehärteten Formulierung untereinander und mit den anderen eingesetzten Additiven verbinden und kann somit die mechanischen Eigenschaften der gehärteten Formulierung verbessern.

Das Bindemittel enthält bevorzugt polymerisierbare und/oder härtende Substanzen, die beispielsweise organische oder anorganische Substanzen sein können. Das Bindemittel kann reaktive organische Substanzen. Organische Bindemittel können beispielsweise aus der Gruppe bestehend aus (Meth)acrylate, Alkydharze, Epoxidharze, Gummi arabicum, Kasein, Pflanzenöle, Polyurethane, Silikonharze, Wachs, Zelluloseleim, ausgewählt werden. Solche reaktiven organischen Substanzen können beispielsweise durch Polymerisation, Vernetzungsreaktion oder ein anderes chemisches Reaktionstyp zum Härten der eingesetzten wärmedämmenden Formulierung und Verfestigung des resultierenden wärmedämmenden Formkörpers führen. Diese Härtung kann beispielsweise thermisch oder unter Einwirkung der UV- oder anderer Strahlung stattfinden.

Zusätzlich zum organischen Bindemittel oder alternativ dazu, kann die eingesetzte wärmedämmende Formulierung anorganische härtende Substanzen enthalten. Anorganische, auch als mineralisch bezeichnete Bindemittel haben im Wesentlichen die gleiche wie die organischen Bindemittel Aufgabe, Zuschlagsstoffe miteinander zu verbinden. Des Weiteren werden anorganische Bindemittel in nichthydraulische Bindemittel und hydraulische Bindemittel unterteilt. Nichthydraulische Bindemittel sind in Wasser lösliche Bindemittel wie Weißkalk, Dolomitkalk, Gips und Anhydrit, die nur an der Luft erhärten. Hydraulische Bindemittel sind Bindemittel, die an der Luft und unter Wasser erhärten und nach der Härtung in Wasser unlöslich sind. Zu ihnen gehören hydraulische Kalke, Zemente, Putz- und Mauerbinder. Die wärmedämmende Formulierung und der wärmedämmende Formkörper der vorliegenden Erfindung umfassen bevorzugt mindestens ein Bindemittel ausgewählt aus der Gruppe bestehend aus Zemente, zementbasiertes Beton, Mörtel, Putz, Putzbinder, Mauerbinder und Gips ist.

Die im erfindungsgemäßen Formkörper enthaltende wärmedämmende Formulierung kann zusätzlich mindestens ein Lösungsmittel enthalten. Das Lösungsmittel kann dabei aus der Gruppe bestehend aus Wasser, Alkohole, aliphatische und aromatische Kohlenwasserstoffe, Äther, Ester, Aldehyde, Ketone und deren Gemische ausgewählt sein. Beispielsweise können als Lösungsmittel Wasser, Methanol, Ethanol, Propanol, Butanol, Pentan, Hexan, Benzol, Toluol, Xylol, Diethyläther, Methyl-tert-Butyläther, Ethylacetat, Aceton verwendet werden. Besonders bevorzugt weisen die in der wärmedämmenden Formulierung eingesetzten Lösungsmittel einen Siedepunkt von weniger als 300 °C, besonders bevorzugt weniger als 200 °C auf. Solche relativ flüchtigen Lösungsmittel können bei der Härtung der wärmedämmenden Formulierung leicht verdünstet oder verdampft werden.

Neben dem Bindemittel enthält der wärmedämmende Formkörper der vorliegenden Erfindung mindestens einen Zuschlagsstoff, bevorzugt einen mineralischen Zuschlagsstoff ausgewählt aus der Gruppe bestehend aus Quarz, gemahlener Naturstein, Sand, Kies, Perliten, Vulkangestein / Bims, gefällte Kieselsäuren, pyrogen hergestellte Kieselsäuren, Aerogelpartikel oder Gemischen davon, oder einen organischen Zuschlagsstoff, beispielsweise Styroporkugeln. Besonders bevorzugt enthält der erfindungsgemäße Formkörper Siliziumdioxid haltige Partikel. Solche Siliziumdioxid haltige Partikel können als Pulver oder vorzugsweise als Granulate mit nummerisch mittlerer Partikelgröße von über 10 µm, bevorzugt von 20 bis 4000 µm, besonders bevorzugt von 50 bis 3500 µm, ganz besonders bevorzugt von 100 bis 3000 µm vorliegen. Eine numerische mittlere Partikelgröße eines solchen Siliziumdioxid haltigen Granulats kann nach ISO13320:2009 durch Laserbeugungs-Partikelgrößenanalyse bestimmt werden. Dabei wird aus der resultierenden gemessenen Partikelgrößenverteilung der Mittelwert d₅₀, der wiedergibt, welche Partikelgroße 50% aller Partikeln nicht übersteigt, als numerische mittlere Partikelgröße definiert.

Ganz besonders bevorzugt enthält der wärmedämmende Formkörper der vorliegenden Erfindung pyrogene Kieselsäuren. Pyrogene Kieselsäuren werden mittels Flammenhydrolyse oder Flammenoxidation hergestellt. Dabei werden hydrolysierbare oder oxidierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet ist Siliciumtetrachlorid. Die so erhaltene hydrophile Kieselsäure ist amorph. Pyrogene Kieselsäuren liegen in der Regel in aggregierter Form vor. Unter "aggregiert" ist zu verstehen, dass sogenannte Primärpartikel, die bei der Genese zunächst entstehen, sich im weiteren Reaktionsverlauf fest miteinander unter Bildung eines dreidimensionalen Netzwerkes verbinden. Die Primärpartikel sind weitestgehend porenfrei und weisen auf ihrer Oberfläche freie Hydroxylgruppen auf. Solche hydrophilen Kieselsäuren können nach Bedarf beispielsweise durch Behandlung mit reaktiven Silanen hydrophobiert werden. Sowohl die hydrophilen als auch die hydrophoben Kieselsäuren können als mineralische Zuschlagsstoffe in dem erfindungsgemäßen Formkörper eingesetzt werden.

Der wärmedämmende Formkörper der vorliegenden Erfindung kann Zuschlagsstoffe umfassen, die mindestens ein IR-Trübungsmittel enthalten. Ein solches IR-Trübungsmittel verringert die Infrarot-Durchlässigkeit eines Wärmedämmungsmaterials und minimiert somit den Wärmeübergang durch Strahlung. Bevorzugt wird das IR-Trübungsmittel aus der Gruppe bestehend aus Siliziumkarbid, Titandioxid, Zirkoniumdioxid, Ilmenite, Eisentitanate, Eisenoxide, Zirkoniumsilikate, Manganoxide, Graphite, Ruße und Gemischen davon ausgewählt. Die Partikelgröße der Trübungsmittel liegt in der Regel zwischen 0,1 bis 25 µm.

Der erfindungsgemäße wärmedämmende Formkörper kann vorzugsweise von 5 bis 90 Gew.-%, bevorzugt von 7 bis 70 Gew.-%, besonders bevorzugt von 10 bis 60 Gew.-% eines Bindemittels und von 20 bis 95 Gew.-%, bevorzugt von 25 bis 80 Gew.-%, besonders bevorzugt von 30 bis 70 Gew.-% eines Zuschlagsstoffes enthalten.

Der wärmedämmende Formkörper der vorliegenden Erfindung weist bevorzugt eine Dichte von bis zu 1200 kg/m³, bevorzugt bis zu 1000 kg/m³, besonders bevorzugt bis zu 800 kg/m³ auf.

Der in dem erfindungsgemäßen wärmedämmenden Formkörper eingesetzte Zuschlagsstoff weist vorzugsweise eine Stampfdichte von 30 bis 500 kg/m³, bevorzugt von 50 bis 300 kg/m³, besonders bevorzugt von 100 bis 250 kg/m³ auf. Stampfdichten verschiedener pulverförmiger oder grobkörniger granularer Materialien können nach DIN ISO 787-11:1995 "Allgemeine Prüfverfahren für Pigmente und Füllstoffe - Teil 11: Bestimmung des Stampfvolumens und der Stampfdichte" bestimmt werden. Dabei wird die Fülldichte einer Schüttung nach dem Rütteln und Stampfen gemessen.

Der in dem erfindungsgemäßen wärmedämmenden Formkörper eingesetzte Zuschlagsstoff kann eine BET Oberfläche von größer als 20 m²/g aufweisen, bevorzugt von 30 bis 500 m²/g, besonders bevorzugt von 50 bis 400 m²/g, ganz besonders bevorzugt von 70 bis 350 m²/g. Die spezifische Oberfläche, auch vereinfacht BET Oberfläche genannt, wird nach DIN 9277:2014 durch Stickstoffadsorption nach dem Brunauer-Emmett-Teller-Verfahren bestimmt.

Die Wärmeleitfähigkeit des erfindungsgemäßen Formkörpers, gemessen nach EN 12667:2001, beträgt weniger als 100 mW/(m*K), bevorzugt von 10 bis 90, besonders bevorzugt von 15 bis 70, ganz besonders bevorzugt von 20 bis 50 mW/(m*K).

Ein weiterer Gegenstand der vorliegenden Erfindung ist Verfahren zur Herstellung eines wärmedämmenden Formkörpers umfassend die folgenden Schritte:
a) Bereitstellung eines Gemisches enthaltend mindestens ein Bindemittel und einen mineralischen Zuschlagsstoff unter Bildung einer wärmedämmenden Formulierung;
b) Befüllung eines porösen Substrats mit der wärmedämmenden Formulierung;
c) Härtung der im Schritt b) in das poröse Substrat befüllten Formulierung.

Der zuvor beschriebene erfindungsgemäße Formkörper kann beispielsweise durch dieses erfindungsgemäße Verfahren hergestellt werden.

Bevorzugt umfasst das Verfahren der vorliegenden Erfindung zusätzlich einen Schritt d) Verpressung und/oder Formgebung des Formkörpers unter Druck. Dieser zusätzliche Schritt kann bevorzugt während und/oder nach dem Schritt b) und/oder während und/oder nach dem Schritt c) des erfindungsgemäßen Verfahrens durchgeführt werden.

Die im Schritt c) des erfindungsgemäßen Verfahrens stattfindende Härtung kann durch mindestens teilweise Polymerisation und/oder Verdampfung des Lösungsmittels erfolgen. Je nach verwendetem System, kann dieser Schritt bevorzugt bei Temperatur von 0 bis 500 °C, besonders bevorzugt von 5 bis 400°C, ganz besonders bevorzugt von 10 bis 300 °C erfolgen. Die Härtung im Schritt c) kann an der Luft oder unter Sauerstoffausschluss, beispielsweise unter Schutzgasatmosphäre von Stickstoff oder Kohlendioxid erfolgen. Dieser Schritt kann unter Normaldruck oder unter einem reduzierten Druck, zum Beispiel im Vakuum erfolgen.

Das poröse Substrat kann im Schritt b) des erfindungsgemäßen Verfahrens teilweise oder vollständig mit einer wärmedämmenden Formulierung befüllt werden. Die Befüllung des porösen Substrats kann auf jede dazu geeignete Weise erfolgen, beispielsweise durch Anstreichen, Auftragen, Schmieren, Auspressen der wärmedämmenden Formulierung aus einer Tube und so weiter.

Der wärmedämmende Formkörper der vorliegenden Erfindung kann zur Wärmedämmung verwendet werden. Besonders bevorzugt kann der erfindungsgemäße Formkörper zur Wärmedämmung von Gebäuden, Wänden, Decken, Fluren, Dächer verwendet werden.

### Beispiel

In diesem Beispiel wurde das Abstandsgewirke der Firma Müller Textiles, 51674 Wiehl, Deutschland, mit dem Namen T5960 aus 100% Polyester verwendet. Diese Struktur weist eine Dicke von 20 mm auf, ein Flächengewicht von ca. 1080 g/m² und hat Deckschichten mit Öffnungen im Bereich 5 mm Durchmesser. Die Oberflächen werden durch Polfäden auf Abstand gehalten, die dem Gewirke hierdurch eine gewisse Druckfestigkeit geben, bei gleichzeitiger hoher Flexibilität und Rückstellvermögen. Dieses Abstandsgewirke wurde in der Größe 300 mm x 300 mm auf eine geschlossene Fläche (Labortisch) gelegt.

Als nächstes wurde ein wärmedämmender Mörtel manuell mit einem Spachtel angemischt. Hierzu wurde das Produkt Aero Plaster M ul der Firma ADT Aero Dämm Technik GmbH (Deutschland) verwendet. Das Anmischen erfolgte entsprechend der Vorgabe auf einen Sack (15 kg) ca. 8 Liter Wasser zu verwenden bis eine homogene Mischung entstanden ist.

Dieser wärmedämmende Mörtel wurde anschließend in das Abstandsgewirke mittels eines Spatels eingestrichen und eingepresst. Am besten haben sich oszillierende Bewegungen hervorgetan. Anschließend wurde dieses Muster vom Tisch gelöst, die Deckflächen abschließend glattgestrichen und für 10 Tage bei Raumtemperatur auf einem Rost gehärtet.

Das Muster hatte eine Masse von 1300 g und eine Flächenmasse von 14500 g/m² (Dichte: 725 kg/m³). Dann wurde das ausgehärtete Muster mittels eines Plattengeräte hinsichtlich Wärmeleitfähigkeit entsprechend EN 12667 vermessen. Das Muster weist eine Wärmeleitfähigkeit von 86 mW/(m*K) bei Raumtemperatur auf. Dieses Beispiel zeigt, dass mit dem erfindungsgemäßen Verfahren auf eine sehr einfache und praktische Weise ein wärmedämmender und gut handhabbarer Formkörper, in diesem Fall eine wärmedämmende Platte hergestellt werden kann.

## Patentansprüche

1. Wärmedämmender Formkörper aufweisend Wärmeleitfähigkeit von bis zu 100 mW/(m*K), umfassend ein poröses Substrat und eine wärmedämmende Formulierung enthaltend mindestens ein Bindemittel und mindestens einen Zuschlagsstoff.

2. Wärmedämmender Formkörper nach Anspruch 1,
**dadurch gekennzeichnet, dass**
der Formkörper eine Dicke von 1 bis 500 mm aufweist.

3. Wärmedämmender Formkörper nach einem der Ansprüche 1 oder 2,
**dadurch gekennzeichnet, dass**
das poröse Substrat aus der Gruppe bestehend aus synthetischen Polymeren, Zellulose-basierten Faser, Baumwolle, Wolle, Seide, Mineralwolle, Glaswolle, Metallen, Kohlefaser und deren Kombinationen ausgewählt wird.

4. Wärmedämmender Formkörper nach einem der Ansprüche 1 bis 3,
**dadurch gekennzeichnet, dass**
das poröse Substrat aus einem Abstandgewirke besteht.

5. Wärmedämmender Formkörper nach einem der Ansprüche 1 bis 4,
**dadurch gekennzeichnet, dass**
das Bindemittel polymerisierbare und/oder härtende Substanzen umfasst.

6. Wärmedämmender Formkörper nach einem der Ansprüche 1 bis 5,
**dadurch gekennzeichnet, dass**
das Bindemittel Zement, zementbasiertes Beton, Mörtel, Putz und/oder Gips umfasst.

7. Wärmedämmender Formkörper nach einem der Ansprüche 1 bis 6,
**dadurch gekennzeichnet, dass**
der Zuschlagsstoff ein mineralischer Zuschlagsstoff ausgewählt aus der Gruppe bestehend aus Quarz, gemahlener Naturstein, Sand, Kies, Perliten, Vulkangestein, Bims, gefällte Kieselsäuren, pyrogen hergestellte Kieselsäuren, Aerogelpartikel oder Gemischen davon ist, oder ein organischer Zuschlagsstoff ist.

8. Wärmedämmender Formkörper nach einem der Ansprüche 1 bis 7,
**dadurch gekennzeichnet, dass**
der mineralische Zuschlagsstoff Siliziumdioxid haltige Granulate mit mittlerer Partikelgröße von über 100 µm umfasst.

9. Wärmedämmender Formkörper nach einem der Ansprüche 1 bis 8,
**dadurch gekennzeichnet, dass**
der mineralische Zuschlagsstoff mindestens ein IR-Trübungsmittel enthält.

10. Wärmedämmender Formkörper nach Anspruch 9,
**dadurch gekennzeichnet, dass**
das IR-Trübungsmittel aus der Gruppe bestehend aus Siliziumkarbid, Titandioxid, Zirkoniumdioxid, Ilmenite, Eisentitanate, Eisenoxide, Zirkoniumsilikate, Manganoxide, Graphite, Ruße und Gemischen davon ausgewählt wird.

11. Wärmedämmender Formkörper nach einem der Ansprüche 1 bis 10,
**dadurch gekennzeichnet, dass**
sie eine Dichte von bis zu 1000 kg/m³ aufweist.

12. Wärmedämmender Formkörper nach einem der Ansprüche 1 bis 11,
**dadurch gekennzeichnet, dass**
der mineralische Zuschlagsstoff eine Schüttdichte von 30 bis 500 g/L aufweist.

13. Verfahren zur Herstellung eines wärmedämmenden Formkörpers umfassend die folgenden Schritte:
a) Bereitstellung eines Gemisches enthaltend mindestens ein Bindemittel und einen mineralischen Zuschlagsstoff unter Bildung einer wärmedämmenden Formulierung;
b) Befüllung eines porösen Substrats mit der wärmedämmenden Formulierung;
c) Härtung der im Schritt b) in das poröse Substrat befüllten Formulierung;

14. Verfahren nach Anspruch 13, umfassend zusätzlich einen Schritt d) Verpressung und/oder Formgebung des Formkörpers unter Druck.

15. Verwendung des Formkörpers gemäß einem der Ansprüche 1 bis 12 zur Wärmedämmung von Gebäuden, Wänden, Decken, Fluren, Dächer.
